(19) Europäisches Patentamt / European Patent Office / Office européen des brevets

(11) **EP 4 596 089 A1**

(12) **EUROPÄISCHE PATENTANMELDUNG**

(43) Veröffentlichungstag:
06.08.2025  Patentblatt 2025/32

(21) Anmeldenummer: 25153654.6

(22) Anmeldetag: 23.01.2025

(51) Internationale Patentklassifikation (IPC):
**B01D 61/12** (2006.01)    **A61M 1/16** (2006.01)
**C02F 1/44** (2023.01)

(52) Gemeinsame Patentklassifikation (CPC):
(C-Sets verfügbar)
**B01D 61/12; C02F 1/008; C02F 1/441;**
B01D 2311/06; B01D 2311/2512; C02F 2209/03;
C02F 2209/40                                    (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **01.02.2024  DE 102024102858**

(71) Anmelder: **B. Braun Avitum AG
34212 Melsungen (DE)**

(72) Erfinder:
• **LIEB, Nino
  34212 Melsungen (DE)**
• **ODERNHEIMER, Philipp
  34212 Melsungen (DE)**
• **GIESA, Jonas
  34121 Kassel (DE)**

(74) Vertreter: **Tergau & Walkenhorst
Intellectual Property GmbH
Lurgiallee 12
60439 Frankfurt am Main (DE)**

(54)  **VERFAHREN UND VORRICHTUNG ZUR PERMEATERZEUGUNG**

(57)    Ein Verfahren zur bedarfsgerechten Regelung der Permeaterzeugung mittels einer Permeat erzeugenden Flüssigkeitsaufbereitungsanlage (130), an die eine Permeat führende Ringleitung (102) angeschlossen ist, umfasst die Schritte:

a. Überprüfen, ob ein gemessener Druck und/oder Volumenstrom von Permeat in der Ringleitung (102) einen jeweils vordefinierten Auslösewert überschreitet,

b. Falls ja, zyklusgesteuertes inkrementelles Absenken eines angewendeten oberen Grenzwerts für eine die Permeaterzeugung der Flüssigkeitsaufbereitungsanlage (130) steuernde Stellgröße, basierend auf einem vorherigen Stellgrad unter Verwendung eines Dekrements, und

c. Falls nein, Fortsetzen der Permeatproduktion unter Anwendung eines voreingestellten statischen oberen Grenzwerts.

FIG. 3

Angewendeter oberer Grenzwert = Stellgrad (k-1) − Abnahmefaktor

Volumenstromgrenze überschritten?

Druckgrenze überschritten?

Angewendeter oberer Grenzwert = Oberer Grenzwert (Parameter)

(52)  Gemeinsame Patentklassifikation (CPC): (Forts.)

C-Sets
B01D 2311/06, B01D 2311/14

**Beschreibung**

Die vorliegende Erfindung betrifft ein Verfahren zur Regelung der Permeaterzeugung mittels einer Permeat erzeugenden Flüssigkeitsaufbereitungsanlage, insbesondere einer Umkehrosmoseanlage. Sie betrifft ferner ein zur Durchführung des Verfahrens geeignetes Permeatversorgungssystem.

In herkömmlichen Systemen ist die Permeatproduktion oft ungeregelt, was zu ineffizientem Betrieb und möglichen Qualitätsproblemen führen kann. Aktuell werden Druckschalter in den Anlagen verbaut, welche beim Auslösen (Überdruck) die Anlage bzw. die Pumpen abschalten. Dadurch kann es zu kurzzeitigen Produktionsausfällen kommen. Des Weiteren ist es bei herkömmlichen Permeatversorgungssystemen - geregelt oder ungeregelt - oft schwierig, verschiedene Anforderungen (z. B. der Membranhersteller oder bezüglich des Ringleitungsmaterials) prozesssicher einhalten zu können.

Die Erfindung zielt darauf ab, diese Mängel zu beheben und eine präzise und bedarfsgerechte Regelung der Permeatproduktion unter Berücksichtigung von maßgeblichen Parametern bei gleichzeitiger Schonung von Anlagenkomponenten zu ermöglichen.

Die genannte Aufgabe wird erfindungsgemäß gelöst durch ein Verfahren nach Anspruch 1 sowie ein Permeatversorgungssystem nach Anspruch 7.

Demnach umfasst das Verfahren zur Regelung der Permeaterzeugung mittels einer Permeat erzeugenden Flüssigkeitsaufbereitungsanlage, an die eine Permeat führende Ringleitung angeschlossen ist, die Schritte:

a. Überprüfen, ob ein gemessener Druck und/oder Volumenstrom von Permeat in der Ringleitung einen jeweils vordefinierten Auslösewert überschreitet,

b. Falls ja, zyklusgesteuertes inkrementelles Absenken eines angewendeten oberen Grenzwerts für eine die Permeaterzeugung der Flüssigkeitsaufbereitungsanlage steuernde Stellgröße, basierend auf einem vorherigen Stellgrad unter Verwendung eines Dekrements (Dekrementierung), und

c. Falls nein, Fortsetzen der Permeaterzeugung unter Anwendung eines voreingestellten statischen oberen Grenzwerts.

Der Regelalgorithmus überprüft periodisch den Druck und/oder Volumenstrom des erzeugten Permeats in einer Ringleitung. Bei Überschreitung vordefinierter Auslösewerte wird zyklusgesteuert ein oberer Grenzwert schrittweise abgesenkt, um die Permeatproduktion adaptiv zu steuern. Bei Nichtüberschreitung wird die Produktion unter Anwendung eines statischen oberen Grenzwerts fortgesetzt. Die adaptive Regelung ermöglicht eine präzise Steuerung der Permeatproduktion, um den aktuellen Bedarf zu erfüllen aber nicht zu überschreiten. Durch das schrittweise Absenken des oberen Grenzwerts werden Druckstöße im System vermieden, was die Lebensdauer der Anlage bzw. von deren einzelnen Komponenten erhöht. Die kontrollierte Anpassung der Stellgröße minimiert Produktionsausfälle im Vergleich zu herkömmlichen Systemen, die möglicherweise abrupte Abschaltungen aufgrund von Druck-überschreitungen veranlassen.

Dabei handelt es sich in diesem Verfahren nicht um eine reine Druckregelung oder Volumenstromregelung, sondern zusätzlich um eine druck- oder volumenstrominduzierte Stellgradbegrenzung um einen potenziell gefährlichen Zustand zu vermeiden, da die Bauteile innerhalb der Herstellerspezifikationen gehalten und hydraulische Limitationen des Systems eingehalten bzw. nicht überschritten werden sollen. Dabei ist vorteilhafterweise eine Regelung / ein Regler mit einem Integralanteil vorgesehen, der temporär ausgesetzt oder durch die Dekrementierung begrenzt wird, sobald der gemessene Druck und/oder Volumenstrom den voreingestellten (definierten) Auslösewert überschreitet.

In bevorzugter Ausgestaltung ist die Flüssigkeitsaufbereitungsanlage eine Umkehrosmoseanlage. Eine Umkehrosmoseanlage bietet den speziellen Vorteil, dass sie eine äußerst effektive Methode zur Wasseraufbereitung verwirklicht. Durch den Einsatz von halbdurchlässigen Membranen ermöglicht die Umkehrosmoseanlage die Entfernung von verschiedenen Verunreinigungen, einschließlich Schwermetalle, Salze und andere unerwünschte Substanzen, aus dem Wasser. Dies führt zu einer hochwertigen Permeatquelle, die auch für sensible medizinische Anwendungen geeignet ist. Das beschriebene Regelungsverfahren ist speziell auf die Anforderungen und Randbedingungen von Umkehrosmoseanlagen zugeschnitten.

Zweckmäßigerweise wird der Druck und/oder der Volumenstrom an einem Ringleitungsvorlauf stromaufwärts von etwaigen Entnahmeleitungen, die von der Ringleitung abzweigen, gemessen. Dies hat den Vorteil, dass die Messungen an einer Position erfolgen, die repräsentativ für den Gesamtfluss in der Ringleitung ist, ohne durch spätere (stromabwärtige) Druck- oder Volumenverluste beeinträchtigt zu sein.

Vorteilhafterweise ist das Dekrement, um das der obere Grenzwert in jedem Zyklus verringert wird, größer oder gleich Null und zumindest für einen vordefinierten Zeitraum zeitlich konstant. Dies gewährleistet eine stabile und vorhersagbare Anpassung des oberen Grenzwerts für die die Permeaterzeugung steuernde Stellgröße. Die Konstanz des Dekrements ermöglicht eine konsistente Regelung über den definierten Zeitraum hinweg.

Als Stellgröße (im Sinne eines Reglerausgangs bzw. Aktorsollwerts) wird bevorzugt die Pumpendrehzahl verwendet, die derart angesteuert wird, dass der Sollwert des Drucks erreicht und gehalten wird.

Ein zur Durchführung des Verfahrens geeignetes Permeatversorgungssystem umfasst die Merkmale:

a. eine Permeat erzeugende Flüssigkeitsaufbereitungsanlage, wobei eine pro Zeiteinheit erzeugte Menge an Permeat über eine Stellgröße steuerbar ist,

b. eine an die Flüssigkeitsaufbereitungsanlage angeschlossene, Permeat führende Ringleitung,

c. ein einen Druck des Permeats in der Ringleitung messendes Druckmessgerät und/oder ein einen Volumenstrom des Permeats in der Ringleitung messendes Volumenstrommessgerät, und

d. eine in Zyklen arbeitende Steuerungs- oder Regelungseinheit, in der das beschriebene Regelungsverfahren implementiert ist.

Die in Bezug auf das Verfahren genannten Merkmale und Vorteile übertragen sich sinngemäß auf die Vorrichtung und umgekehrt.

Vorteilhafterweise ist das Druckmessgerät ein Drucksensor oder ein Druckschalter. Ein Drucksensor ermöglicht eine präzise und kontinuierliche Messung des Permeatdrucks in der Ringleitung, wobei die Schwellenwertüberwachung dann typischerweise in der Steuerungs- oder Regelungseinheit stattfindet. Ein Druckschalter vereinigt diese Funktionen in einem kompakten Bauteil und gibt dementsprechend ein diskretes bzw. binäres Signal aus. Entsprechendes gilt für das Volumenstrommessgerät, dass entweder ein Volumenstromsensor oder ein Volumenstromschalter ist.

In einer bevorzugten Ausgestaltung ist die beschriebene Regelung der Permeaterzeugung während bestimmter Betriebsphasen und/oder aufgrund von Nutzerinteraktionen deaktivierbar. Dadurch ist eine hohe Anpassungsfähigkeit des Systems an besondere Umstände gegeben. Eine Druckbegrenzung ist beispielsweise im normalen Anlagenbetrieb immer aktiv, kann jedoch manuell deaktiviert werden für erweiterte Tests, Fehlerfindungen, Prüfungen an der Anlage und/oder Ringleitung. Auch eine Volumenstrombegrenzung ist beispielsweise im normalen Anlagenbetrieb immer aktiv, kann jedoch manuell deaktiviert werden in Betriebsphasen, in denen ein möglichst hoher Volumenstrom von Bedeutung ist, beispielhafterweise für Spülvorgänge, Desinfektionsprozesse etc.

Vorteilhafterweise umfasst die Ringleitung einen Ringleitungsrücklauf, der eine Verzweigung in zwei parallele Leitungsstränge aufweist, wobei der erste Leitungsstrang einen Durchflussbegrenzer umfasst und der zweite Leitungsstrang ein Überströmventil umfasst. Diese Konfiguration ermöglicht eine gezielte Steuerung des Permeatflusses und trägt zur Effizienz des Systems bei. Der primäre Vorteil dieser Ausgestaltung ist das Ermöglichen von Spülungen (Spülvolumen fließt über das Überströmventil) und das Dämpfen von Druckspitzen.

Ein Ausführungsbeispiel der Erfindung wird nachfolgend unter Bezugnahme auf die beigefügten Zeichnungen näher erläutert. Es zeigt:

FIG. 1 ein bislang gebräuchliches Permeatversorgungssystem mit einer ungeregelten Umkehrosmoseanlage (Stand der Technik),

FIG. 2 ein Permeatversorgungssystem gemäß der Erfindung mit einer geregelten Umkehrosmoseanlage,

FIG. 3 ein Flussdiagramm eines im Permeatversorgungssystem gemäß FIG. 2 implementierten Regelalgorithmus / Regelungsverfahrens, und

FIG. 4 ein Diagramm, in dem der Verlauf des Prozess- und Stellwerts des Leitungsdrucks über die Zeit gezeigt ist, wenn der implementierte Regelalgorithmus angewendet wird.

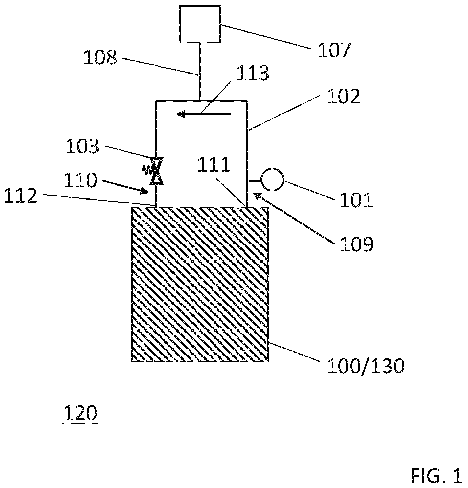

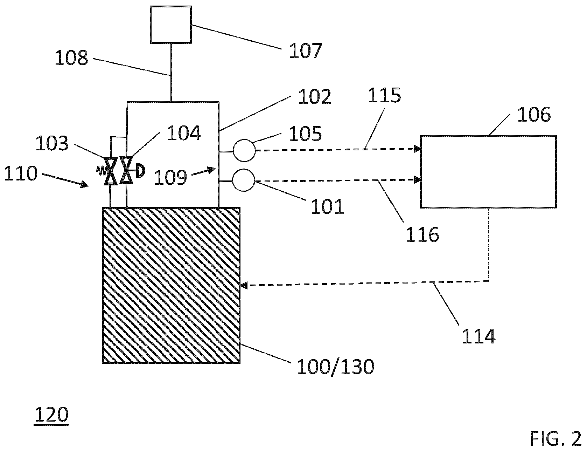

Gleiche oder gleichwirkende Elemente in FIG. 1 und 2 sind mit denselben Bezugszeichen versehen.

Das in FIG. 1 rein schematisch im Überblick dargestellte Permeatversorgungssystem 120 umfasst als zentralen Bestandteil eine Flüssigkeitsaufbereitungsanlage 130, nämlich eine Umkehrosmoseanlage 100, die nach dem Prinzip der Umkehrosmose Wasser filtert und aufbereitet. Das am Auslass 111 bereitgestellte gefilterte und aufbereitete, hochreine Wasser wird auch als Permeat bezeichnet und kommt insbesondere bei Dialyseanwendungen und anderen medizinischen Anwendungen zum Einsatz. Zur Verteilung des Permeats an verschiedene Verbraucher 107 oder Abnehmer ist eine Ringleitung 102 an den Auslass 111 angeschlossen, von der entsprechend der Anzahl der Verbraucher 107 oder Abnehmer eine Anzahl von Entnahmeleitungen 108 abzweigt (hier im Beispiel nur eine dargestellt). Nicht über die Entnahmeleitungen 108 abgenommenes Permeat wird über die Ringleitung 102 und den Rückfluss-Einlass 112 in die Umkehrosmoseanlage 100 zur erneuten Verwendung zurückgespeist. Der Leitungsabschnitt der Ringleitung 102 stromaufwärts der Entnahmeleitung(en) 108 wird als Ringleitungsvorlauf 109 bezeichnet, und der Leitungsabschnitt der Ringleitung 102 stromabwärts der Entnahmeleitung(en) 108 wird als Ringleitungsrücklauf 110 bezeichnet. Die Strömungsrichtung des Permeats 113 in der Ringleitung 102 ist durch einen Pfeil gekennzeichnet.

Das Permeatversorgungssystem 120 gemäß FIG. 1 entspricht einem hausinternen Stand der Technik der Anmelderin. Die Umkehrosmoseanlage 100 ist ungeregelt und produziert unter Umständen nicht bedarfsgerechte Permeatmengen. Um dennoch einen gewissen Mindestdruck und Höchstdruck von Permeat in der Ringleitung 102 sicherzustellen, wird einerseits ein Überströmventil 103 am Ende der Ringleitung 102 bzw. am Ringleitungsrücklauf 110 eingesetzt und anderseits ein als Drucksensor oder Druckschalter ausgebildetes Druckmessgerät 101 am Anfang der Ringleitung 102 bzw. am Ringleitungsvorlauf 109. Dabei können das dargestellte Druckmessgerät 101 und/oder das Überströmventil 103 entweder Teil der Umkehrosmoseanlage 100 oder Teil der Ringleitung 102 sein.

Bei einem Überströmventil 103 wirkt dem Mediumdruck eine Feder entgegen, um das Ventil geschlossen zu halten. Wird der Ansprechdruck erreicht, beginnt das Ventil proportional zur Druckerhöhung zu öffnen, bis der notwendige Hub erreicht ist und der Systemdruck sinken kann. Sofort beginnt das Ventil wieder proportional zur Druckminderung zu schließen. Knapp unterhalb des Ansprechdrucks ist das Ventil wieder komplett geschlossen. Auf diese Weise wird in dem Permeatversorgungssystem 120 gemäß FIG. 1 unter normalen Umständen der Mediumdruck des Permeats in der Ringleitung 102 in einem gewissen Bereich um den Ansprechdruck des Überströmventils 103 herum gehalten. Mit anderen Worten "regelt" das Ventil 103 in FIG. 1 den Druck am Ringleitungsende und lässt dadurch variablen Volumenstrom bei gleichbleibendem Haltedruck zu. Im Allgemeinen besitzen die geregelten Ventile neben der beschriebenen Feder noch weitere Geometrien und/oder Komponenten, welche das Regeln ermöglichen, auf die aber an dieser Stelle nicht eingegangen werden muss.

Sollte trotz geöffnetem Überströmventil 103 der Duck des Permeats in der Ringleitung 102 in unerwünschter Weise anteigen, so wird eine durch das Druckmessgerät 101 gesteuerte kurzzeitige Abschaltung der Umkehrosmoseanlage 100 durchgeführt. Dazu ist das Druckmessgerät 101 bevorzugt als Druckschalter ausgebildet, der bei Überschreiten eines voreingestellten Maximaldrucks ein Abschaltsignal an die Umkehrosmoseanlage 100 sendet. Alternativ kann das Druckmessgerät 101 auch ein Drucksensor mit kontinuierlichem Ausgangssignal sein, welches in einer zugeordneten Steuereinheit einem Vergleich mit dem voreingestellten Maximaldruck unterworfen wird, wobei die Steuereinheit bei Schwellenwertüberschreitung ein entsprechendes Abschaltsignal ausgibt (mit anderen Worten bildet dann die Kombination aus Drucksensor und Steuereinheit einen Druckschalter).

Die so verwirklichte "Regelung" oder Begrenzung des Drucks in der Ringleitung 102 unter Inkaufnahme von kurzzeitigen Produktionsausfällen ist nur rudimentär und nicht für alle Umkehrosmoseanlagen 100 anwendbar. Selbst bei grundsätzlicher Vereinbarkeit können sich die temporären Anlagenabschaltungen negativ auf Effizienz und Lebensdauer der Umkehrosmoseanlage 100 auswirken. Daneben kann dies auch bei angeschlossenen Dialysegeräten / Verbrauchern zu einem Unterbrechen bzw. Ausfall der Therapie führen. Des Weiteren ist eine Begrenzung oder Regelung des Volumenstroms unabhängig vom Druck des Permeats in der Ringleitung 102 nicht möglich.

Ein Ausführungsbeispiel für ein hinsichtlich seiner Anwendbarkeit und Regelbarkeit verbessertes Permeatversorgungssystem 120 ist in FIG. 2 schematisch dargestellt. Darin sind eine Druckbegrenzung und eine Volumenstrombegrenzung für das Permeat in der Ringleitung 102 verwirklicht. Alternativ könnte lediglich einer dieser beiden Aspekte verwirklicht sein. Jeder diese Varianten liegt im Rahmen der vorliegenden Erfindung, und dementsprechend ist das dargestellte Beispiel nicht einschränkend zu verstehen.

Der Grundaufbau des Permeatversorgungssystems 120 in FIG. 2 entspricht demjenigen von FIG. 1. Das heißt, es ist eine Umkehrosmoseanlage 100 vorhanden, an die eine Ringleitung 102 für Permeat angeschlossen ist. Die Ringleitung 102 weist einen Ringleitungsvorlauf 109, einen Ringleitungsrücklauf 110 und dazwischen liegend eine Anzahl von zu Verbrauchern 107 oder Abnehmern führenden Entnahmeleitungen 108 (in FIG. 2 nur eine dargestellt) auf.

Der Ringleitungsrücklauf 110 unterscheidet sich insofern von demjenigen in FIG. 1, als er eine Verzweigung der Ringleitung 102 in zwei parallele Leitungsstränge umfasst. **In** den ersten dieser Leitungsstränge ist ein (vorzugsweise einstellbarer) Durchflussbegrenzer 104 geschaltet, der im Normalbetrieb den Volumenstrom von Permeat durch die die Ringleitung 102 hinsichtlich eines Maximalwertes begrenzt. **In** den zweiten Leitungsstrang ist ein Überströmventil 103 geschaltet, das im Grundzustand geschlossen ist und öffnet sobald der Leitungsdruck einen voreingestellten (vorzugsweise einstellbaren) Ansprechdruck überschreitet. Dadurch wird ein kontinuierlicher, nach oben begrenzter Volumenstrom bei variablem Druck und ein erhöhter Volumenstrom bei Überschreiten eines Druckgrenzwertes, verbunden mit dem dann gewünschte Druckabbau, ermöglicht. Dies sind vorteilhafte Unterstützungsmaßnahmen zusätzlich zu der weiter unten beschriebenen Regelung, die in alternativen Implementierungen jedoch auch anders gelöst sein können.

Entscheidend ist, dass die Umkehrosmoseanlage 100 eine geregelte Umkehrosmoseanlage 100 ist, deren Permeatproduktion durch eine zugeordnete Steuerungs- oder Regelungseinheit 106 (auch vereinfacht als Steuerung oder Regler bezeichnet) geregelt wird. Eine geeignete Stellgröße hierfür ist beispielsweise die Pumpendrehzahl einer in die Umkehrosmoseanlage 100 integrierten, als Stellglied wirksamen Pumpe. Über die Pumpendrehzahl werden Druck und Volumenstrom eingestellt. Als Regeleingangsgröße wird der Druck verwendet, und es wird auf einen festen Sollwert am Ringleitungsende geregelt. Die Stellgröße wird durch einen in der Steuerungs- oder Regelungseinheit 106 implementierten Regelalgorithmus über einen in der Umkehrosmoseanlage 100 bzw. in der Pumpe vorhandenen Aktor adaptiv eingestellt. Allgemein gesprochen ist das Stellglied die physische Vorrichtung, die die Stellgröße in eine Aktion umsetzt, um den Zustand des Systems zu ändern. Der entsprechende Wirkzusammenhang ist in FIG. 2 durch einen gestrichelten Pfeil 114 dargestellt. Vervollständigt wird der Regelkreis durch die sensorische Erfassung geeigneter Messgrößen, die der Steuerungs- oder Regelungseinheit 106 eingangsseitig zugeführt werden. Auch dieser Wirkzusammenhang ist - in diesem Fall durch zwei - gestrichelte Pfeile 115, 116 dargestellt.

Im vorliegenden Fall handelt es sich bei den dem Regelalgorithmus zur Verfügung gestellten Regelgrößen zum einen um den gemessenen Mediumdruck oder einen daraus abgeleiteten Wert und zum anderen um den gemessenen Volumenstrom von Permeat im Ringleitungsvorlauf 109 oder einen daraus abgeleiteten Wert. Wie bereits erwähnt, kann alternativ lediglich eine dieser beiden Größen sensorisch erfasst und/oder bei der Steuerung oder Regelung verwendet werden. Zu diesem Zweck ist einerseits ein Druckmessgerät 101 und/oder andererseits ein Volumenstrommessgerät 105 an den Ringleitungsvorlauf 109 angeschlossen (beispielsweise an einem Anschlussstutzen der Ringleitung 102) oder direkt in ein dort vorhandenes Leitungssegment integriert.

Dabei können das dargestellte Druckmessgerät 101, das Volumenstrommessgerät 105, der Durchflussbegrenzer 104 und/oder das Überströmventil 103 Teil der Umkehrosmoseanlage 100 oder Teil der Ringleitung 102 sein.

Wenden wir uns zuerst dem Druckmessgerät 101 zu. Bei dem Druckmessgerät 101 handelt es sich bevorzugt um einen Druckschalter, der ein binäres Signal ausgibt und an die Steuerungs- oder Regelungseinheit 106 übermittelt - je nachdem, ob der gemessene Druck den voreingestellten Auslösedruck überschreitet oder nicht. Alternativ handelt es sich um einen Drucksensor mit kontinuierlichem oder mehrstufigen Ausgangssignal, welches an die Steuerungs- oder Regelungseinheit 106 übermittelt und in dieser gegen einen hinterlegten Auslösewert / Schwellenwert / Grenzwert (in diesem Zusammenhang alles gleichwertige Synonyme) verglichen wird, und zwar mit binärem Resultat: unterschritten oder überschritten (wobei der Auslösewert selbst je nach verwendeter Definition einem der beiden Bereiche zugeordnet sein kann).

Durch Druckverluste im Gesamtsystem, z.B. verursacht durch Ringleitungsgeometrien, Anzahl der Permeatverbraucher und Permeatvolumenstrom, können bei einem identischen Druck am Ringleitungsende verschiedene Drücke am Ringleitungsvorlauf (bei 101) auftreten. Um zu verhindern, dass der Druck an dieser Stelle in einen kritischen Bereich gerät, wird die Dekrementierung des maximalen Stellgrades durchgeführt.

Dies gilt vollkommen analog für das Volumenstrommessgerät 105, falls vorhanden. Das heißt, es handelt sich bevorzugt um einen Volumenstromschalter, der einen diskreten Schaltzustand besitzt und bei Überschreiten eines voreingestellten Auslösewertes / Schwellenwertes / Grenzwertes einen entsprechenden binären Signalwert ausgibt, oder einen Sensor, der in Kombination mit der Steuerungs- oder Regelungseinheit 106 als Volumenstromschalter fungiert.

Mit anderen Worten kann in beiden Fällen (Druck oder Volumenstrom) ein vollwertiger Schalter verwendet werden, welcher ein binäres Signal an die Steuerungs- oder Regelungseinheit 106 sendet oder ein konventioneller Sensor. Wenn das Messgerät als Sensor ausgeführt wird, kann entweder der Sensor selbst oder die Steuerungs- oder Regelungseinheit 106 oder ein zwischengeschalteter Umwandler die Umwandlung bzw. den Vergleich gegen einen Auslösewert / Schwellenwert / Grenzwert vornehmen.

Die Grenzwerte für den Druck und/oder den Volumenstrom können, je nach Ausgestaltung der Sensoren / Schalter vorteilhafterweise auf dem jeweiligen Sensor / Schalter (mechanisch und/oder über Software) oder auf der Steuerungs- oder Regelungseinheit 106 eingestellt werden. Diese Einstellungen können entweder über Nutzer, z. B. durch Eingabe über eine Bedienoberfläche, oder über ein Datenaustauschsystem erfolgen. Das Datenaustauschsystem kann beispielsweise mit einer geeigneten Datenbank kommunizieren, und zwar bevorzugt in automatisierter Weise.

Der Regelalgorithmus der in der Steuerungs- oder Regelungseinheit 106 durch geeignete Software und/oder Hardware implementiert ist, ist darauf ausgelegt ein geregeltes System innerhalb der technisch definierten Grenzen zu halten. Es lässt sich nun wie folgt beschreiben:
Sobald mindestens eines der beiden Signale (basierend auf Druck oder Volumenstrom) eine Überschreitung des Auslösewertes anzeigt und damit eine Begrenzung der Permeatproduktion in der Umkehrosmoseanlage 100 auslöst, wird ein zuvor angewandter statischer oberer Grenzwert (typischerweise ein voreingestellter fester Parameter) für eine die Permeatproduktion der Umkehrosmoseanlage 100 steuernde Stellgröße, insbesondere die Pumpendrehzahl, inkrementell, also in Schritten vorgegebener Schrittgröße, abgesenkt. Man kann auch sagen, dass der maximale Ausgang des Reglers schrittweise verringert wird. Dieser maximale Ausgang begrenzt die maximale Ansteuerung des Regelkreises. Das bedeutet, dass der Regler nicht in der Lage ist, einen höheren Stellgrad an das Stellglied bzw. den Aktor zu senden als den oben definierten statischen oberen Grenzwert, sondern im Gegenteil bei Überschreitung des Auslösewertes in Bezug auf Druck oder Volumenstrom durch schrittweise Absenkung des Grenzwerts für die Stellgröße eine Verringerung der Permeatproduktion einleitet.

Stellwert und Stellgrad werden in der vorliegenden Beschreibung weitgehend synonym verwendet. Der Begriff Stellgröße beschreibt den vom Regler beeinflussten Wert (also in diesem Anwendungsfall die Pumpendrehzahl). Sprich, der Stellgrad bestimmt/manipuliert die Stellgröße.

Dem liegt eine Systemkonzeption zugrunde, bei dem die Steuerungs- oder Regelungseinheit 106 in Zyklen, typischerweise mit näherungsweise konstanter Zykluszeit, arbeitet. Das heißt im vorliegenden Fall, in jedem Zyklus wird zunächst die Auslösebedingung (Volumenstromgrenze überschritten und/oder Druckgrenze überschritten) überprüft und je nach Ausgang der Überprüfung eine Anpassung der Stellgröße, basierend auf deren Wert im vorigen Zyklus, vorgenommen.

Falls die Auslösebedingung erfüllt ist, folglich eine Begrenzung der Permeatproduktion ausgelöst wird, wird der angewendete obere Grenzwert nach folgender Formel (1) berechnet:

$$\text{Angewendeter oberer Grenzwert} = \text{Stellgrad (k-1)} - \text{Dekrement} \qquad (1)$$

Darin bedeutet:

- Angewendeter oberer Grenzwert = Der temporäre Grenzwert, welcher im aktuellen Zyklus k auf den Stellgrad des Stellglieds angewendet wird.
- Stellgrad (k-1) = Der Stellgrad, welcher bei der letzten Berechnungsiteration, sprich im vorherigen Zyklus k-1, an das Stellglied gesendet wurde.
- Dekrement = Ein vorzugsweise fester Betrag, welcher zur schrittweisen Reduzierung des oberen Grenzwertes bzw. des Stellgrads führt.

Das Dekrement wird auch als Abnahmefaktor bezeichnet, obwohl es im mathematischen Sinne ein Subtrahend und kein Faktor ist. Das Dekrement kann dabei entweder 0 oder größer 0 sein. Bei einem Dekrement von 0 wird der Stellgrad eingefroren. Bei einem Dekrement größer 0 wird der Stellgrad über die Dauer der Begrenzung schrittweise verringert. Das Dekrement ist zweckmäßigerweise zumindest während eines Begrenzungsvorgangs (solange die auslösende Bedingung erfüllt ist) konstant, ggf. auch über diese gesamte Regelungsdauer hinweg konstant. Das Dekrement in Kombination mit den Zykluszeiten bzw. Berechnungsintervallen gibt die Änderungsrate des Stellgrades an.

Sobald das auslösende Signal für die Begrenzung der Permeatproduktion nicht mehr vorhanden ist (Volumen- und/oder Druckgrenze nicht mehr überschritten), wird wieder der statische obere Grenzwert angewendet. Vorteilhafterweise kommt es in diesem Fall bei Verwendung eines Reglers mit Integralanteil, vorzugsweise eines PID-Reglers, zu keinem Sprung, wenn das Anti-Windup den Integrator-Anteil des Reglers begrenzt und ebenfalls dekrementiert. Nachdem der obere Grenzwert wieder auf den statischen Ursprungswert wechselt, wird der Integrator normal "gefüllt", und es kommt zu keiner sprunghaften Änderung. Das ist ein wesentlicher Vorteil des beschriebenen Regelungskonzepts.

Zum besseren Verständnis des vorigen Abschnitts sei ergänzt, dass bei Reglern mit Integralanteil, also auch bei PID-Reglern, der so genannte "Windup-Effekt" auftreten kann. Dieser ist dadurch gekennzeichnet, dass es beispielsweise bei einem abrupten Arbeitspunktwechsel zu inakzeptablem Über- bzw. Unterschwingen der Regelgröße kommt, bevor der gewünschte stationäre Wert erreicht wird. Man spricht in diesem Zusammenhang vom "Aufwickeln" oder "Aufziehen" des Integrators oder kurz vom "Windup-Effekt". Eine mögliche Maßnahme zur Bekämpfung des Windup-Effekts besteht in einer aktiven Stellgrößenbeschränkung. Eine andere häufig angewandte Anti-Windup Strategie besteht darin, dass bei aktiver Stellgrößenbeschränkung die Integration nicht vollständig angehalten wird, sondern dass dem Aufwickeln des Integrators proportional zur "Verletzung" der Stellgrößenbeschränkung entgegengewirkt wird.

Da Aktoren normalerweise eine Sättigung (maximale Ansteuerung) aufweisen, ist es sinnvoll den Regler-Ausgang entsprechend an diese Sättigung anzupassen. Würde man dies nicht tun, käme es zu einer Verschlechterung der Systemkontrolle aufgrund von Verzögerungseffekten (siehe auch zuvor beschriebenen Wind-Up Effekt). In der hier beschriebenen bevorzugten Ausführung wird die Sättigung / maximale Ansteuerung des Reglers sukzessive dekrementiert. In Kombination mit dem integrierten Anti-Windup wird somit der Aktor schrittweise heruntergefahren.

Eine weitere (alternative) Ausführung besteht darin, den aktuellen Prozesswert (PV) mit einem Dekrement-Faktor zu subtrahieren und diesen dem Regler als Sollwert vorzugeben. Dadurch sinkt ebenfalls die Aktor-Ansteuerung, und der Regler läuft nicht in Sättigung oder erzeugt einen großen Sprung nach Beendigung des Dekrementierprozesses.

Alternativ wäre es möglich den Reglerausgang selbst zu senken. Dies hätte allerdings den Nachteil, dass der eigentliche Reglerausgang weiter ansteigen würde, da der Schleppfehler wachsen würde. Sobald der Dekrementierprozess abgeschlossen ist, würde der Aktor einen "Sprung" erfahren, da der eigentliche Regelausgang wieder verwendet würde.

Die beschriebene Druck- und/oder Volumenstrombegrenzung kann vorteilhafterweise durch Software und/oder Hardware in der Steuerungs- oder Regelungseinheit 106 während bestimmter Betriebsphasen oder aufgrund von Nutzerinteraktionen deaktiviert werden, sodass die Anpassung des oberen Grenzwertes nicht durchgeführt wird.

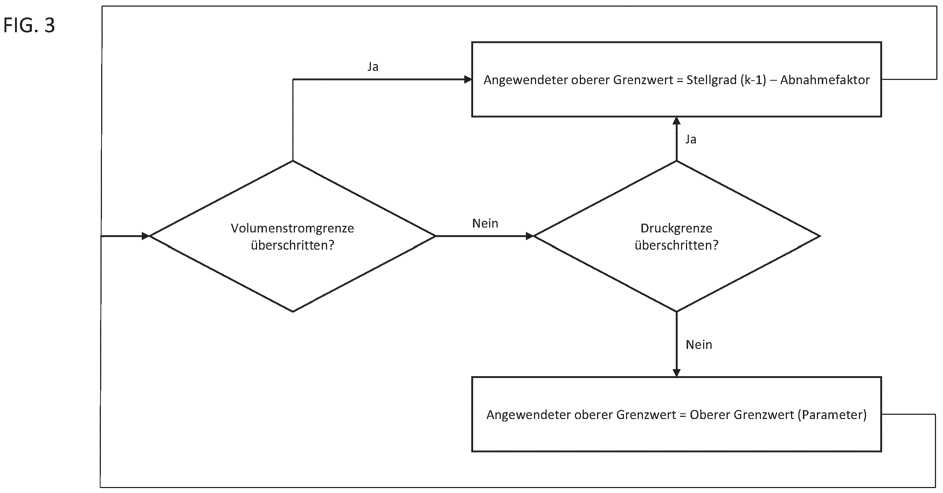

Ein vereinfachtes Flussdiagramm des Regelungsverfahrens ist in FIG. 3 dargestellt. Falls entweder nur die Druck- oder die Volumenstrombegrenzung vorhanden ist, entfällt das jeweils andere Entscheidungssymbol (Raute).

Ein Vorteil dieses Verfahrens besteht darin, dass der Regelkreis (inkl. Wind-Up) wie oben erläutert keine Sprünge im Stellwert erzeugt, sobald die vorgegebene Druck- und/oder Volumenstromgrenze wieder unterschritten wird. Anders ausgedrückt besteht der Vorteil des gesamten Verfahrens darin, eine übergeordnete Anpassung der Systemleistung an Schwellwerte koppeln zu können, welche den Betrieb in einem erlaubten Bereich zulassen, und dass die Aktion bei einer Überschreitung des Schwellwertes keine Abschaltung des Systems ist, sondern eine Anpassung durch Dekrementierung zurück in den "erlaubten" Bereich. Dadurch kommt es zu keinen Druckstößen im System bzw. in den angeschlossenen Geräten. Außerdem können totale Unterbrechungen der Permeatproduktion vermieden werden, da die Permeatproduktion während der Begrenzungsphasen in limitierter Form stattfindet.

Um im vorliegenden Verfahren den Wind-Up Effekt zu verhindern, wird die Berechnung des I-Anteils um eine Bedingung erweitert:

$$\text{WENN } Out_P(k) + Out_I(k) > \text{Oberer Grenzwert}$$

$$\text{DANN } Out_I(k-1) = \text{Oberer Grenzwert} - Out_P$$

Dabei ist der obere Grenzwert die Ansteuerungsgrenze des geregelten Aktors. k beschreibt dabei den Zeitpunkt der Berechnung bzw. den Iterationszyklus und "Out" den Stellwert an den Aktor. Die Indizes P und I werden den Regelgliedern eines PI-Reglers zugeordnet. Äquivalent kann diese Bedingung auch umformuliert werden für die untere Ansteuerungsgrenze:

$$\text{WENN } Out_P(k) + Out_I(k) < \text{Unterer Grenzwert}$$

$$\text{DANN } Out_I(k-1) = \text{Unterer Grenzwert} - Out_P$$

Durch diese Anpassung kann verhindert werden, dass der I-Anteil des Reglers über die Sättigung hinaus aufsummiert wird und das Regelverhalten negativ beeinflusst.

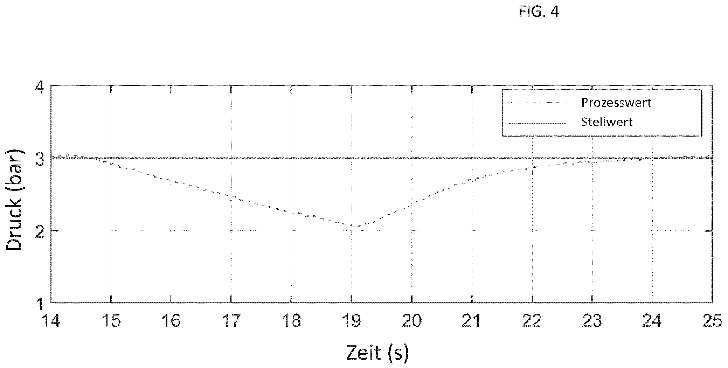

Kern des angemeldeten Verfahrens ist es nun die hier beschriebene Charakteristik anzuwenden, um den Regelausgang bei definierten Ereignissen künstlich zu beeinflussen bzw. zu limitieren. Im Beispiel gezeigt in FIG. 4 wird ein Überdruckereignis an einer kritischen Stelle gemessen, welches durch das Absenken des Pumpendrucks gelöst werden soll. Das Verfahren ist aber anwendbar auf alle mit dem Aktor korrelierten Prozessgrößen durchführbar.

Der Überdruck soll korrigiert werden, indem die Pumpendrehzahl sinken soll. Dazu kommt es zu einer Grenzwertanpassung nachfolgender Gleichung:

$$\text{Oberer Grenzwert} = Out(k-1) - \text{Dekrement}$$

Der obere Grenzwert wird auf den Reglerausgang der letzten Iteration abzüglich eines Dekrements gesetzt. Dadurch kommt es zum Auslösen der oben beschrieben Anti Wind-Up Bedingung, wodurch der aktuelle Regelausgang aktiv über das I-Glied verringert wird. Die Änderungsrate ist dabei vom gewählten Dekrement und den Ausführung- / Berechnungszyklen abhängig, da Out(k - 1) im darauffolgenden Berechnungszyklus bereits der angepasste Reglerausgang ist inkl. der Dekrementierung.

Als Resultat des Verfahrens wird die Pumpendrehzahl nun gesenkt, obwohl der Regler eine Erhöhung der Drehzahl herbeiführen möchte (Regelabweichung steigt). Sobald der Überdruck nicht mehr anliegt, wird der Obere Grenzwert zurück auf den eigentlichen Ausgangswert gesetzt. Dies wird in FIG. 4 verdeutlicht, wo ab -14.5s ein Überdruck erzeugt wird, was zu einem Dekrementieren der Pumpendrehzahl um 2.5%/s führt. Sobald der Überdruck nicht mehr vorhanden ist (~19s) wird die Pumpendrehzahl auf den Ausgangswert zurückgesetzt.

Der Vorteil des Verfahrens besteht darin, dass der Regler neben seiner Primäraufgabe (Angleichen des Prozesswertes an den Stellwert) für sekundäre Aufgaben (Anpassung der Pumpendrehzahl bei spezifizierten Ereignissen) genutzt werden kann. Darüber hinaus ist das Verfahren dem Manipulieren des Reglerausgangs mit einem Dekrement dahingehend überlegen, dass es zu keinem Sprung im Stellwert kommt, sobald das Dekrementieren beendet wird. Das liegt daran, dass das Anti Wind-Up das I-Glied aktiv mitverändert und somit einem Aufsummieren im "Hintergrund" vorbeugt.

Die vorstehende Beschreibung ist zwar mit Blick auf eine Umkehrosmoseanlage 120 verfasst, lässt sich aber unschwer auch auf andere Permeat erzeugende Flüssigkeitsaufbereitungsanlagen 130, speziell für medizinische Anwendungen wie insbesondere Dialyse, anwenden.

Bezugszeichenliste

    100 - Umkehrosmoseanlage
    101 - Druckmessgerät

102 - Ringleitung
103 - Überströmventil
104 - Durchflussbegrenzer
105 - Volumenstrommessgerät
106 - Steuerungs- oder Regelungseinheit
107 - Verbraucher
108 - Entnahmeleitung
109 - Ringleitungsvorlauf
110 - Ringleitungsrücklauf
111 - Auslass
112 - Einlass
113 - Strömungsrichtung
114 - Pfeil
115 - Pfeil
116 - Pfeil
120 - Permeatversorgungssystem
130 - Flüssigkeitsaufbereitungsanlage

**Patentansprüche**

1. Verfahren zur Regelung der Permeaterzeugung mittels einer Permeat erzeugenden Flüssigkeitsaufbereitungsanlage (130), an die eine Permeat führende Ringleitung (102) angeschlossen ist, umfassend die Schritte:

   a. Überprüfen, ob ein gemessener Druck und/oder Volumenstrom von Permeat in der Ringleitung (102) einen jeweils vordefinierten Auslösewert überschreitet,
   b. Falls ja, zyklusgesteuertes inkrementelles Absenken eines angewendeten oberen Grenzwerts für eine die Permeaterzeugung der Flüssigkeitsaufbereitungsanlage (130) steuernde Stellgröße, basierend auf einem vorherigen Stellgrad, unter Verwendung eines Dekrements, und
   c. Falls nein, Fortsetzen der Permeaterzeugung unter Anwendung eines voreingestellten statischen oberen Grenzwerts.

2. Verfahren nach Anspruch 1, wobei die Flüssigkeitsaufbereitungsanlage (130) eine Umkehrosmoseanlage (100) ist.

3. Verfahren nach einem der vorangehenden Ansprüche, wobei der Druck und/oder der Volumenstrom an einem Ringleitungsvorlauf (109) stromaufwärts von Entnahmeleitungen (108), die von der Ringleitung (102) abzweigen, gemessen werden.

4. Verfahren nach einem der vorangehenden Ansprüche, wobei das Dekrement größer oder gleich Null und zumindest für einen vordefinierten Zeitraum zeitlich konstant ist.

5. Verfahren nach einem der vorangehenden Ansprüche, wobei als Stellgröße die Pumpendrehzahl einer in die Umkehrosmoseanlage (100) integrierten Pumpe verwendet wird.

6. Verfahren nach einem der vorangehenden Ansprüche, wobei die Regelung einen Integralanteil aufweist, der durch einen Algorithmus, insbesondere unter Verwendung des Dekrements, begrenzt wird, wenn der gemessene Druck und/oder Volumenstrom den Auslösewert überschreitet.

7. Permeatversorgungssystem (120), umfassend die Merkmale:

   a. eine Permeat erzeugende Flüssigkeitsaufbereitungsanlage (130), wobei eine pro Zeiteinheit erzeugte Menge an Permeat über eine Stellgröße steuerbar ist,
   b. eine an die Flüssigkeitsaufbereitungsanlage (130) angeschlossene, Permeat führende Ringleitung (102),
   c. ein einen Druck des Permeats in der Ringleitung (102) messendes Druckmessgerät (101) und/oder ein einen Volumenstrom des Permeats in der Ringleitung (102) messendes Volumenstrommessgerät (105), und
   d. eine in Zyklen arbeitende Steuerungs- oder Regelungseinheit (106), in der das Verfahren nach einem der vorangehenden Ansprüche implementiert ist.

8. Permeatversorgungssystem (120) nach Anspruch 7, wobei das Druckmessgerät (101) ein Drucksensor oder ein Druckschalter ist.

9. Permeatversorgungssystem (120) nach Anspruch 7 oder 8, wobei das Volumenstrommessgerät (105) ein Volumenstromsensor oder ein Volumenstromschalter ist.

10. Permeatversorgungssystem (120) nach einem der Ansprüche 7 bis 9, wobei die Regelung der Permeaterzeugung während bestimmter Betriebsphasen und/oder aufgrund von Nutzerinteraktion deaktivierbar ist.

11. Permeatversorgungssystem (120) nach einem der Ansprüche 7 bis 10, wobei die Ringleitung (102) einen Ringleitungsrücklauf (110) umfasst, der einen Durchflussbegrenzer (104) und ein Überströmventil (103) umfasst.

12. Permeatversorgungssystem (120) nach einem der Ansprüche 7 bis 11, wobei in der Steuerungs- oder Regelungseinheit (106) eine Regelung implementiert ist, die einen Integralanteil aufweist, der durch einen Algorithmus, insbesondere unter Verwendung des Dekrements, begrenzt wird, wenn der gemessene Druck und/oder Volumenstrom den Auslösewert überschreitet.

FIG. 1

FIG. 2

120

FIG. 3

Angewendeter oberer Grenzwert = Stellgrad (k-1) – Abnahmefaktor

Ja

Ja

Volumenstromgrenze überschritten?

Nein

Druckgrenze überschritten?

Nein

Angewendeter oberer Grenzwert = Oberer Grenzwert (Parameter)

FIG. 4

Europäisches
Patentamt

European
Patent Office

Office européen
des brevets

# EUROPÄISCHER RECHERCHENBERICHT

Nummer der Anmeldung

EP 25 15 3654

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2021/362093 A1 (VÖLKER MANFRED [DE] ET AL) 25. November 2021 (2021-11-25) * Anspruch 1; Abbildung 1 * ----- | 11 | INV. B01D61/12 A61M1/16 C02F1/44 |
| X | DE 43 31 102 C2 (DWA DIALYSE WASSER AUFBEREITUN [DE]) 17. April 2003 (2003-04-17) | 1-10,12 | |
| Y | * Anspruch 1; Abbildung 1 element P1 and S3 * ----- | 11 | |

RECHERCHIERTE SACHGEBIETE (IPC)

B01D
C02F
A61M

Der vorliegende Recherchenbericht wurde für alle Patentansprüche erstellt

| Recherchenort | Abschlußdatum der Recherche | Prüfer |
|---|---|---|
| München | 27. Mai 2025 | Hoyer, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 15 3654

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2025

| Im Recherchenbericht angeführtes Patentdokument | Datum der Veröffentlichung | Mitglied(er) der Patentfamilie | Datum der Veröffentlichung |
|---|---|---|---|
| US 2021362093 A1 | 25-11-2021 | DE 202020102937 U1<br>EP 3912706 A1<br>ES 2946443 T3<br>US 2021362093 A1 | 01-07-2020<br>24-11-2021<br>18-07-2023<br>25-11-2021 |
| DE 4331102 C2 | 17-04-2003 | KEINE | |

EPO FORM P0461

Für nähere Einzelheiten zu diesem Anhang : siehe Amtsblatt des Europäischen Patentamts, Nr.12/82